# EUROPÄISCHE PATENTANMELDUNG

(11) **EP 1 077 523 A2**
(43) Veröffentlichungstag der Anmeldung: **21.02.2001**
(21) Anmeldenummer: 00114822.0
(22) Anmeldetag: 11.07.2000
(51) Int. Cl.: H02P 6/14

(54) **Verfahren und Anordnung zur Ansteuerung eines bürstenlosen Gleichstrommotors**

(30) Priorität: 14.08.1999 DE 19938678
(71) Anmelder: Mannesmann VDO AG, 60388 Frankfurt am Main (DE)
(72) Erfinder: Grossmann, Reiner, Dr., 98693 Ilmenau (DE); Henninger, Michael, 65779 Kelkheim (DE); Breyer, Lutz-Peter, 65824 Schwalbach (DE)
(74) Vertreter: Klein, Thomas, Dipl.-Ing.

(57) **Zusammenfassung**

Bei einem Verfahren und einer Anordnung zur Ansteuerung eines bürstenlosen Gleichstrommotors mit Blockkommutierung weicht beim Umschalten des Stroms von einer Wicklung auf eine andere die an mindestens einer der beteiligten Wicklungen angelegte Spannung vorübergehend von der für die Blockkommutierung vorgesehenen Spannung derart ab, daß die zeitlichen Verläufe des durch das Umschalten verursachten Stromanstiegs und Stromabfalls angenähert sind.

## Beschreibung

Die Erfindung betrifft ein Verfahren und eine Anordnung zur Ansteuerung eines bürstenlosen Gleichstrommotors mit Blockkommutierung.

Bürstenlose Gleichstrommotoren werden meist mit einer sogenannten Blockkommutierung betrieben, bei welcher die Wicklungen mit rechteck- oder trapezförmigen Spannungen beaufschlagt werden. Folgt der Strom diesen rechteck- oder trapezförmigen Spannungen, so ergibt sich ein gleichförmiges Moment. Tatsächlich treten jedoch beim Betrieb von bürstenlosen Gleichstrommotoren sogenannte Strom- und Momentenrippel auf.

Aufgabe der vorliegenden Erfindung ist es, insbesondere bei langsam drehenden Anwendungen, wie es zum Beispiel die elektrische Lenkhilfe in Kraftfahrzeugen erfordert, derartige Strom- und Momentenrippel zu reduzieren.

Diese Aufgabe wird mit dem erfindungsgemäßen Verfahren dadurch gelöst, daß beim Umschalten des Stroms von einer Wicklung auf eine andere die an mindestens einer der beteiligten Wicklungen angelegte Spannung vorübergehend von der für die Blockkommutierung vorgesehenen Spannung derart abweicht, daß die zeitlichen Verläufe des durch das Umschalten verursachten Stromanstiegs und Stromabfalls angenähert sind.

Der Erfindung liegt die Erkenntnis zugrunde, daß bei der Umschaltung zwischen zwei Wicklungen die durch den induktiven Anteil der Wicklungen bedingten Ein- und Ausschaltvorgänge der Wicklungen sich nicht gegenläufig verhalten. Dieses hat wiederum seine Ursache darin, daß nach dem An- und Abschalten der jeweiligen Wicklung unterschiedliche Spannungen an den Wicklungen wirksam sind.

Ein Hauptanwendungsgebiet des erfindungsgemäßen Verfahrens sind bürstenlose Gleichstrommotoren mit drei Wicklungen bzw. Strängen. Das Verfahren ist jedoch auch auf Motoren mit anderen Wicklungszahlen anwendbar.

Eine vorteilhafte Ausführungsform des erfindungsgemäßen Verfahrens besteht darin, daß die Spannung an der jeweils abzuschaltenden Wicklung nach dem Einschalten der Spannung an der jeweils anzuschaltenden Wicklung verzögert abnimmt. Die auch beim Abschalten der Wicklung wirksame elektromotorische Kraft kann dabei dadurch berücksichtigt werden, daß die Spannung an der jeweils abzuschaltenden Wicklung zunächst plötzlich und dann verzögert abnimmt.

Eine genauere Anpassung der Stromverläufe beim An- und Abschalten kann gemäß einer Weiterbildung der Erfindung dadurch erfolgen, daß die Spannung an der anzuschaltenden Wicklung zunächst auf einen höheren Wert plötzlich ansteigt und dann auf den für die Blockkommutierung vorgesehenen Wert verzögert abnimmt.

Die Stromverläufe beim Anlegen einer sprunghaft auf einen konstanten Wert steigenden Spannung sind nicht linear, weil unter anderem die induzierten Spannungen nicht linear verlaufen. Eine gute Annäherung wird aber bei einer anderen Weiterbildung der Erfindung dadurch erreicht, daß die verzögerten Spannungsabnahmen im wesentlichen zeitlinear verlaufen. Bei bürstenlosen Gleichstrommotoren wird die Betriebsspannung häufig pulsbreitenmoduliert. Dabei kann das erfindungsgemäße Verfahren ohne zusätzlichen Schaltungsaufwand dadurch realisiert werden, daß die Spannungsverläufe durch Pulsbreitenmodulation erzeugt werden.

Eine andere Weiterbildung des erfindungsgemäßen Verfahrens besteht darin, daß die Abweichungen der Spannung von der für die Blockkommutierung vorgesehenen Spannung in Abhängigkeit von Betriebsparametern des Gleichstrommotors gesteuert werden. Mit dieser Weiterbildung wird berücksichtigt, daß die vorübergehenden Spannungsabweichungen, die zu einer Annäherung des Stromanstiegs und der Stromabnahme erforderlich sind, sowohl von der Drehzahl als auch von der Stromaufnahme des Gleichstrommotors abhängen, weshalb vorzugsweise die Betriebsparameter die Drehzahl und die Stromaufnahme sind.

Insbesondere kann dabei vorgesehen sein, daß plötzliche Spannungsänderungen von der Drehzahl und die Dauer verzögerter Spannungsabnahmen vom Strom des Gleichstrommotors abhängig sind. Eine besonders vorteilhafte Anordnung zur Ansteuerung eines bürstenlosen Gleichstrommotors mit Blockkommutierung, wobei zum Umschalten des Stroms von einer auf eine andere Wicklung Halbleiterschalter vorgesehen sind, die von einer Steuereinrichtung gesteuert werden, wobei der Steuereinrichtung mindestens die gemessene Drehzahl und die gemessene Stromaufnahme zugeführt werden, besteht dadurch, daß die Steuereinrichtung zur Erzeugung von pulsbreitenmodulierten Impulsen mit einer gegenüber der Drehzahl hohen Frequenz ausgelegt ist, wobei die Pulsbreite in mindestens einer der jeweils umzuschaltenden Wicklungen verzögert geändert wird, und daß eine Tabelle mit der Abhängigkeit der Änderung der Pulsbreiten von der zugeführten Drehzahl und den zugeführten Stromwerten vorgesehen ist.

Die Erfindung läßt zahlreiche Ausführungsformen zu. Eine davon ist schematisch in der Zeichnung anhand mehrerer Figuren dargestellt und nachfolgend beschrieben.

Es zeigt:
- Fig. 1: eine teilweise als Blockschaltbild dargestellte erfindungsgemäße Anordnung,
- Fig. 2: verschiedene Stromverläufe bei einem bürstenlosen Gleichstrommotor mit Blockkommutierung und
- Fig. 3: ein Beispiel für einen Spannungsverlauf bei der Umschaltung von einer ersten auf eine zweite Wicklung.

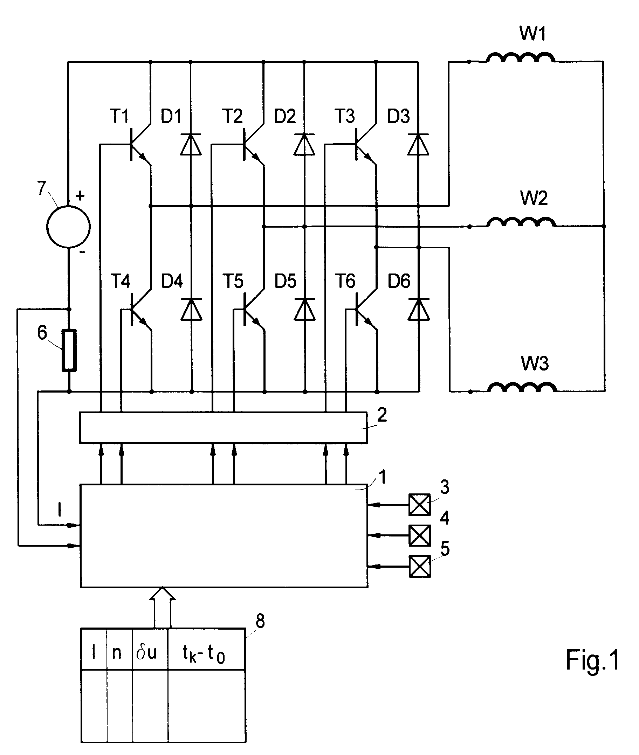

Bei der in Fig. 1 dargestellten Anordnung zur Ansteuerung des Motors sind drei Halbbrückenzweige mit den Transistoren T1 bis T6 vorgesehen, denen Freilaufdioden D1 bis D6 parallel geschaltet sind. An die Abgriffe zwischen jeweils zwei Transistoren T1 und T4, T2 und T5 sowie T3 und T6 ist jeweils ein Anschluß einer Wicklung W1, W2, W3 angeschlossen, die als Stern geschaltet sind. Die Transistoren T1 bis T6 werden von einer Steuereinrichtung 1 über lediglich schematisch dargestellte Treiber 2 angesteuert, wobei die Steuereinrichtung 1 im wesentlichen aus einem Mikroprozessor besteht. Wie auch bei bekannten Anordnungen zur Ansteuerung von bürstenlosen Gleichstrommotoren wird die jeweilige Winkelstellung des im übrigen nicht dargestellten Rotors von gegeneinander um 120° versetzten Hallsensoren 3, 4, 5 erfaßt und der Steuereinrichtung 1 gemeldet. In Abhängigkeit davon erfolgt die Ansteuerung der Transistoren. Außerdem wird die jeweilige Stromaufnahme mit Hilfe eines Strommeßwiderstandes 6 gemessen und einem nicht dargestellten Analog/Digital-Wandler der Steuereinrichtung zugeführt. Aus den Signalen der Hallsensoren kann ferner die Drehzahl berechnet werden. Eine Gleichspannungsquelle 7 dient zum Betrieb der Wicklungen W1, W2, W3.

Ein idealer Stromverlauf durch die Wicklungen W1, W2, W3 in Abhängigkeit von der Winkelstellung des Rotors ist in den Diagrammen a) bis c) als i_{W1} bis i_{W3} dargestellt. Die idealen Ströme weisen jeweils für 120° einer Halbwelle einen konstanten Wert und für die folgenden 30° den Wert Null auf. Die Ströme der einzelnen Wicklungen sind jeweils um 120° phasenverschoben. Dadurch ergibt sich, daß zu jedem Zeitpunkt ein Strom positiv, ein weiterer Strom negativ und der dritte gleich Null ist. Damit ist auch die Stromsummengleichung für den Sternpunkt erfüllt.

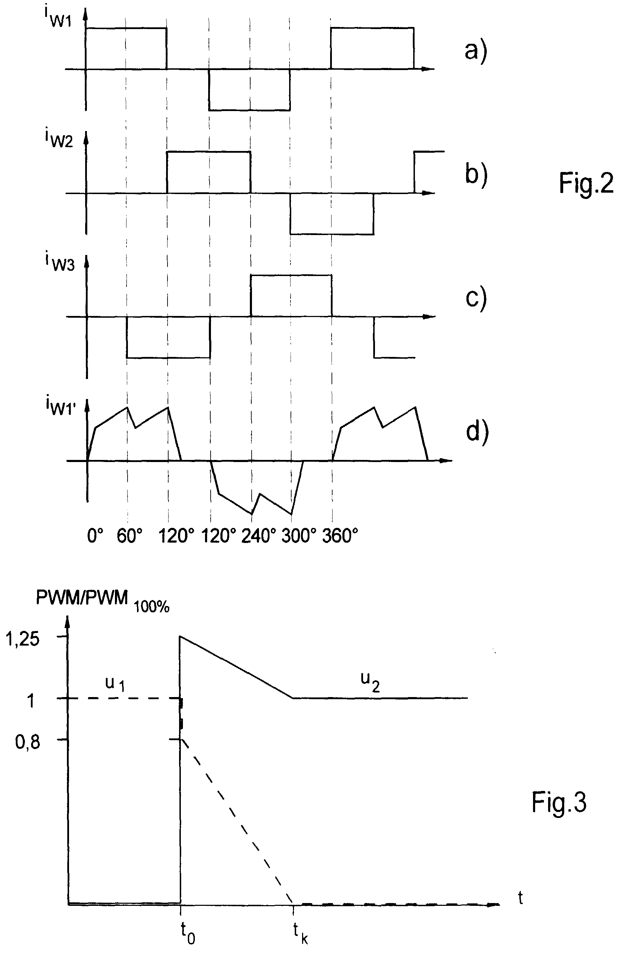

Wie bereits erwähnt, weisen bei einer Beaufschlagung mit Spannungen entsprechend der in den Diagrammen a) bis c) gezeigten Kurvenform die Ströme einen anderen Verlauf auf, was insbesondere dann stört, wenn der Stromanstieg und der Stromabfall nicht gegenläufig sind. Ein dann resultierender Stromverlauf für die Wicklung W1 ist beispielhaft im Diagramm d) der Fig. 2 dargestellt. Dadurch ist das Drehmoment nicht mehr konstant während einer Umdrehung, was insbesondere bei langsam drehenden Antrieben stören kann.

Fig. 3 zeigt den Verlauf der Spannungen u₁ und u₂, die beispielsweise während des Umschaltens zwischen dem Strom i_{W1} auf den Strom i_{W2} bei 120° (Fig. 2a und 2b) erfindungsgemäß vorgesehen sind. Dabei sind die Spannungen u₁ und u₂ auf denjenigen Wert kommutiert, der für den restlichen Teil der jeweiligen Einschaltperiode durch eine Pulsbreitenmodulation PWM_{100%} bewirkt wird. Zu Beginn der Kommutierung bei t₀ springt die Spannung u₁ von 1 auf 0,8, während die Spannung u₂ von 0 auf 1,25 springt. Bis zum Ende der Kommutierung bei tₖ fällt dann die Spannung u₁ auf 0, während die Spannung u₂ von 1,25 auf 1 sinkt.

Sowohl die Höhe des anfänglichen Sprungs als auch die Dauer zwischen tₖ und t₀ werden in Abhängigkeit von diesen Parametern gesteuert. Dazu ist in einem der Steuereinrichtung 1 zugeordneten Speicher 8 eine diese Abhängigkeit darstellende Tabelle abgelegt. Dieses kann beispielsweise in der in Fig. 1 angedeuteten Form sein, wobei jeweils in einer Zeile Werte für den Strom 1, die Drehzahl n, einen Spannungssprung δu und die Dauer tₖ-t₀ abgelegt sind.

## Patentansprüche

1. Verfahren zur Ansteuerung eines bürstenlosen Gleichstrommotors mit Blockkommutierung, dadurch gekennzeichnet, daß beim Umschalten des Stroms von einer Wicklung auf eine andere die an mindestens einer der beteiligten Wicklungen angelegte Spannung vorübergehend von der für die Blockkommutierung vorgesehenen Spannung derart abweicht, daß die zeitlichen Verläufe des durch das Umschalten verursachten Stromanstiegs und Stromabfalls angenähert sind.

2. Verfahren nach Anspruch 1, dadurch gekennzeichnet, daß die Spannung an der jeweils abzuschaltenden Wicklung nach dem Einschalten der Spannung an der jeweils anzuschaltenden Wicklung verzögert abnimmt.

3. Verfahren nach Anspruch 2, dadurch gekennzeichnet, daß die Spannung an der jeweils abzuschaltenden Wicklung zunächst plötzlich und dann verzögert abnimmt.

4. Verfahren nach einem der Ansprüche 2 oder 3, dadurch gekennzeichnet, daß die Spannung an der anzuschaltenden Wicklung zunächst auf einen höheren Wert plötzlich ansteigt und dann auf den für die Blockkommutierung vorgesehenen Wert verzögert abnimmt.

5. Verfahren nach einem der Ansprüche 2 bis 4, dadurch gekennzeichnet, daß die verzögerten Spannungsabnahmen im wesentlichen zeitlinear verlaufen.

6. Verfahren nach einem der vorhergehenden Ansprüche, dadurch gekennzeichnet, daß die Spannungsverläufe durch Pulsbreitenmodulation erzeugt werden.

7. Verfahren nach einem der vorhergehenden Ansprüche, dadurch gekennzeichnet, daß die Abweichungen der Spannung von der für die Blockkommutierung vorgesehenen Spannung in Abhängigkeit von Betriebsparametern des Gleichstrommotors gesteuert werden.

8. Verfahren nach Anspruch 7, dadurch gekennzeichnet, daß die Betriebsparameter die Drehzahl und die Stromaufnahme sind.

9. Verfahren nach Anspruch 8, dadurch gekennzeichnet, daß plötzliche Spannungsänderungen von der Drehzahl und die Dauer verzögerter Spannungsabnahmen vom Strom des Gleichstrommotors abhängig sind.

10. Anordnung zur Ansteuerung eines bürstenlosen Gleichstrommotors mit Blockkommutierung, wobei zum Umschaltendes Stroms von einer auf eine andere Wicklung (W1, W2, W3) Halbleiterschalter (T1 bis T6) vorgesehen sind, die von einer Steuereinrichtung (1) gesteuert werden, wobei der Steuereinrichtung (1) mindestens die gemessene Drehzahl und die gemessene Stromaufnahme zugeführt werden, dadurch gekennzeichnet, daß die Steuereinrichtung (1) zur Erzeugung von pulsbreitenmodulierten Impulsen mit einer gegenüber der Drehzahl hohen Frequenz ausgelegt ist, wobei die Pulsbreite in mindestens einer der jeweils umzuschaltenden Wicklungen verzögert geändert wird, und daß eine Tabelle (8) mit der Abhängigkeit der Änderung der Pulsbreiten von der zugeführten Drehzahl und den zugeführten Stromwerten vorgesehen ist.
